# EUROPEAN PATENT SPECIFICATION

(11) **EP 3 544 855 B1**
(45) Date of publication and mention of the grant of the patent: **23.03.2022**
(21) Application number: 17826275.4
(22) Date of filing: 24.11.2017
(51) Int. Cl.: B60P 1/28, A01D 90/10, B60P 1/04

(54) **MODULAR TIPPER, EXTENSION MODULE, SYSTEM OF TIPPER AND EXTENSION MODULE**
MODULARER KIPPWAGEN, ERWEITERUNGSMODUL, SYSTEM EINES KIPPWAGENS UND ERWEITERUNGSMODUL
REMORQUE À BENNE BASCULANTE MODULAIRE, MODULE D'EXTENSION, SYSTÈME DE REMORQUE À BENNE BASCULANTE ET MODULE D'EXTENSION

(30) Priority: 24.11.2016 BE 201605879
(43) Date of publication of application: 02.10.2019
(73) Proprietor: Blum-Machinery Bvba, 3800 Sint-Truiden (BE)
(72) Inventor: BLUM, Kristof Paul Josef, 3800 Sint-Truiden (BE)
(74) Representative: V.O.
(86) International application number: PCT/IB2017/057391
(87) International publication number: WO 2018/096498

(56) References cited:
- EP-A1- 2 208 411
- DE-A1- 3 302 111
- DE-U1- 20 310 660
- US-B1- 6 688 834

## Description

This invention relates to a tipper, more specifically a transfer cart, for field crops.

Such tippers are generally known, see e.g. DE 203 10 660 U1 and US 6 688 834 B1, and are usually used as transfer carts to transfer harvested field crops in the field to a transport vehicle, such as, for example, a truck. The transfer cart is usually provided with a tractor coupling for coupling with a tractor vehicle, for example a tractor. Also, a transfer cart in most cases is of tipping or tilting design, so that a front side, or a rear side, of a loading body of the transfer cart can end up higher than the opposite side. This is favorable during transfer. The crops can then be transferred by means of a transfer arm into, for example, a loading body or a container of a truck. A truck may be better suited for transport over the road. Thus, the transfer arm can transfer the crops to the truck in an approximately horizontal manner or with a limited angle of inclination.

The loading body in most cases is provided with a floor conveyor which is configured as an endless conveyor belt. When the loading body is tilted, then, by having the endless conveyor belt rotate in the direction of the higher end of the loading body, the crops can be carried along to the loading body end that has been positioned higher. There, the field crops can then be passed over onto a transfer arm and be transferred via the transfer arm to the loading body of a truck. The transfer arm is usually also provided with an endless conveyor to transport the crops.

A drawback of the known transfer carts is that they are usually configured for one specific field crop, for example, for potatoes or beets or maize or onions or peas or grains, fertilizers, beans, carrots, etc. This entails for each field crop a considerable investment in a transfer cart, which can be used just for a limited period of the year, that is, during harvesting of the specific crop. On the other hand, it is also a drawback, especially for transfer carts whose loading body tilts around a front side, with the rear side hence ending up higher, that the view of transfer from the tractor vehicle is very limited. As a consequence, it can be difficult to monitor, and where necessary adjust, the transfer of crops.

Publication DE20310660 describes a tandem dump trailer which is tippable forwards, rearwards or sideways for unloading agricultural bulk goods. The loading body has a tailboard at the rear side, and at the front a transfer screwed tube is mounted. The front side of the loading body is designed to be at an angle of approximately 15 degrees to facilitate unloading via the transfer screwed tube when the loading body is tipped forwards, with the rear side standing up.

An object of the invention is to provide a tipper, in particular a transfer cart, that counteracts at least one of the abovementioned drawbacks. In particular, there is a need for a versatile tipper, more specifically a versatile transfer cart, that counteracts at least one of the abovementioned drawbacks.

To that end, the invention provides a tipper, in particular a transfer cart, for field crops, comprising a chassis with at least one pair of locomotion elements; a loading body pivotable with respect to a rear side of the chassis; wherein the tipper at a front side thereof is provided with a tractor coupling for coupling with a tractor vehicle; wherein at the front side of the loading body a coupling device is provided for detachably coupling a transfer module.

By providing a transfer cart whose loading body is pivotable around the rear side, the loading body rises at the front side during transfer. As a result, the view of transfer from the tractor vehicle is better and control and adjustment from the tractor vehicle during transfer can be done better. The loading body is preferably adjustable with respect to the chassis between a lying position, in which the loading body rests on the chassis, and a standing position, in which the loading body is at an angle with respect to the chassis. Typically, adjusting elements, such as hydraulic cylinders, are provided at the front side of the tipper between the loading body and the chassis, to pivot the loading body with respect to the chassis by pushing the front side of the loading body upwards.

The tractor coupling can be, for example, a pole, or a swan-neck coupling, on which at one end a trailer coupling or a ball coupling or a different kind of coupling may be provided for coupling with the tractor vehicle.

By additionally providing the tipper at the front side with a coupling device for detachably coupling an extension module, an all-round, flexible and versatile tipper, in particular transfer cart, can be provided that can be used for different field crops. Advantageously, the extension module is configured as a transfer module. The transfer module can transfer the crops from the loading body of the tipper to a ready external receptacle, for example a container or a truck. The transfer module transports the crops from the loading body to a ready receptacle in a direction substantially transverse to the longitudinal direction of the tipper. The extension module may also be configured as a volume module for providing additional loading volume, or as a cleaning module, or as a door module for providing a modular door at the front side of the tipper. Advantageously, the extension module may be implemented as a door module that is exchangeable for a further extension module. For example, the door module may be taken away from the loading body and in the place of the door module a volume module may be suspended. Typically, a door module is couplable at an upper side of the front side of the loading body, and the further extension module can also be coupled at the upper side.

Preferably, the extension module is crop-specifically configured, and thus, depending on the field crop to be transferred, another crop-specific transfer module may be coupled with the tipper. By providing an extension module, the tipper can be of modular design, and the tipper can be used for a longer time throughout the year, that is, during the harvest times for different crops, which are normally at different times of the year. Consequently, the tipper can be used more, which can make the investment in such a tipper and crop-specific modules more economic.

The extension module may be implemented as a transfer module which is preferably provided with a transfer arm, preferably a fold-out transfer arm, i.e., one capable of being folded out. Via the transfer arm the field crops can be transferred from the front side of the loading body to another vehicle, for example a loading body of a truck. In an embodiment, the extension module may be implemented as a module for increasing the loading volume of the loading body, whether or not in combination with a transfer arm. The extension module may thus be of use-specific design: depending on the desired use of the tipper, there may be provided a door module, a volume module, a transfer module, etc., which may each in turn be of crop-specific design as well. Many variants are possible.

The coupling device may be implemented in different ways. For example, the coupling device may be provided as one or more elongate tubes, for example two or three, which extend in longitudinal direction parallel to the longitudinal direction of the loading body, and are at the front side of the loading body. The extension module may be provided with corresponding projecting prongs which fit into elongate tubes of the loading body. In this manner, the extension module can be coupled to and uncoupled from the loading body in a simple manner. Possibly, locking elements may be provided to lock the projecting prongs of the extension module in the elongate tubes during use.

Also, an adjusting device is provided to adjust the extension module with respect to the loading body. Advantageously, the transfer arm, if the extension module is equipped with a transfer arm, is approximately horizontal, viewed in a direction transverse to the longitudinal direction of the loading body, thus allowing the crops to be transferred relatively fast and efficiently to a ready truck. With an adjusting device, the setting of the module can be done with respect to the loading body. Alternatively, the projecting prongs of the module can make an angle with respect to a remaining part of the module, being the part of the module provided with a transfer arm, that is equal to the maximum adjusting angle of the loading body with respect to the chassis of the tipper. Thus, upon maximum tilting of the loading body, the module will also be substantially horizontal. Alternatively, the projecting prongs may also be adjustable, thus allowing the angle of the module with respect to the loading body to be adjusted.

Alternatively, the coupling device can comprise a frame which is attachable at the front side of the loading body, and on which a module may be attached, detachably or not so.

Alternatively, the coupling device may be implemented as a hinge connection or a hook, snap or other connection by which a module can be attached at the front side of the loading body. The transfer module may for example comprise a cassette which is configured for detachably coupling with the coupling device.

Possibly, the coupling device as a frame may be permanently attached at the front side of the loading body, and may thus be constructionally and mechanically implemented to receive the transfer module and absorb the forces during transfer. Thus, the frame can be part of the coupling device. As the frame is at the front side of the loading body, the frame, upon pivoting of the loading body, is moved up or down along with it.

Advantageously, the coupling device is above the tractor coupling so that the tractor coupling is not in the way when the module is being coupled to the coupling device.

The extension module is preferably substantially as wide as the width of the front side of the loading body, thus allowing optimum use to be made of the width of the opening at the front side of the loading body. As a consequence, the flow rate of, for example, transfer can be as optimal as possible.

By providing the coupling device with fastening elements which are configured to cooperate with corresponding fastening elements of the extension module, the extension module can be relatively simply and reliably coupled to and uncoupled from the loading body. The fastening elements may be, for example, a pin-and-hole connection, or a bolt-nut connection, or a hook connection, etc. Many variants are possible. The fastening elements are preferably of robust design to be able to keep functioning reliably in the working conditions on the land, frequently involving lots of sand and/or mud as well as environmental influences such as rain or wind. Optionally, locking elements may be provided to lock the attachment of the module to the loading body during use.

Preferably, a farmer has at his disposal a set of a tipper and a number of use-specific and/or crop-specific extension modules, for example transfer modules. Thus, depending on the crop to be harvested, he can couple onto the tipper the module specific for the crop to be harvested. Thus, the transfer module may be provided with cleaning rollers, or a transfer arm, which cleaning rollers and/or transfer arm may also be crop-depending. Thus, for one crop, the cleaning rollers may be mounted closer together than for another crop. Also the transfer arm, for example its width and/or floor conveyor and/or transfer rate, may be different for different crops.

The transfer module may be adjustably attachable to the frame of the tipper and/or to the loading body. Additionally and/or alternatively, the frame may be adjustably attached to the loading body. By providing adjustment possibilities, it can be ensured that the transfer module, preferably the transfer arm that is attachable to the transfer module, can be aligned approximately horizontally to transfer the crops and/or the position of the cleaning rollers can be set in order that the crops can move optimally from the cleaning rollers to the transfer arm. Optionally, the elements of the module, such as the cleaning rollers and/or the transfer arm, may be individually adjustable with respect to, for example, a cassette of the module.

For example, the frame is adjustably attached to the loading body. Thus, when the loading body has been pivoted upwards, the relative position of the frame with respect to the loading body can be adjusted so that the position of the frame, and of the module if attached to the frame, can be adjusted. Advantageously, the frame is adjustable around a front shaft of a floor conveyor of the loading body. Alternatively, the extension module may be couplable with the coupling device adjacent the front driving shaft, so that the extension module is adjustable around the front driving shaft and thus the position of the extension module can be adjusted.

Usually, after all, the loading body is provided with a floor conveyor which is equipped as an endless conveyor belt that is rotatable around a driving shaft, so that the floor conveyor, when driven, can carry the crops along in a longitudinal direction of the loading body. The front shaft is preferably at a front side of the loading body, viewed in the normal driving direction of the tipper. The front shaft can be a driving shaft, provided with a driving mechanism, or may be a driven shaft, following the motion of another driving shaft. The driving shaft may be at a front side of the loading body, at a rear side, or two driving shafts may be provided, of which one at the front side and one at the rear side. Preferably, there is a driving shaft at the front side of the loading body, so that setting of the floor conveyor can also be done at the front side, there where the products leave the loading body. By advantageously configuring the module to be adjustable around the driving shaft at the front side of the loading body, the distance between the module and the loading body, for example between the module attachable on the frame and the end of the floor conveyor, can be kept approximately equal during adjustment. Thus, the distance between the floor conveyor and, for example, cleaning rollers or transfer arm of the module, can remain substantially equal so that no gap arises through which crop products can drop down.

Alternatively and/or additionally, the frame may be adjustable with respect to the loading body, for example through an angle substantially equal to the pivoting angle of the loading body upon upward tilting of the loading body. For example, the module may be adjustable with respect to the coupling device for a so-called fine adjustment, for optimum setting of a relative position of the module, for example of a transfer arm of the module. In an example, it may be desired to set the transfer arm approximately horizontally, viewed transversely to the tipper, or the module and/or transfer arm can have a slight angle, in longitudinal direction and/or in transverse direction of the tipper. Many variants are possible.

Advantageously, the transfer module is provided with at least one fold-out transfer arm. The fold-out transfer arm may be capable of folding out between a folded-in position and a folded-out position. In the folded-in position the transfer arm is folded up and is situated approximately within outside dimensions of the module and/or the frame, in any case within the width of the tipper. This is advantageous for transport and storage purposes. In the folded-out position the transfer arm is wholly or partly folded out in a position in which the arm extends at least partly beyond the module and/or the frame, preferably beyond the tipper, so that the transfer arm can reach over a ready receptacle or truck in a direction substantially transverse to the longitudinal direction of the tipper. The transfer arm can be an articulated arm, having, for example, two or three or more arm parts that are mutually hinged. In folded-out position the arm, when attached on a tipper, extends in a transverse direction of the tipper.

The extension module is thus adjustable between a folded-in position, or transport position, and a folded-out position or transfer position. In the transport position or folded-in position, the extension module, in particular the transfer arm, is folded in, so that the extension module is not wider than the width of the loading body, and thus does not project during transport, for example of the tractor vehicle with the tipper over a road. In the transfer position or folded-out position, the extension module, in particular a transfer arm, is folded out to allow transfer between the loading body and a transport vehicle. In the transfer position the module will typically be wider than the loading body and project outside the loading body on at least one side.

Advantageously, the transfer module is adjustable to the transfer position when the loading body is at an angle of about 0 to about 20 degrees with respect to the chassis. When the loading body is on the chassis (angle approximately 0 degrees), the crops, with a transfer module in the folded-out position, can for example be transferred into a planting machine, such as, for example, a potato planting machine. When the loading body is at an angle, the front side of the loading body is higher and the extension module, as transfer module, can then be brought to the transfer position. The transfer module is then also higher, as a consequence of which the view of the transfer module from the tractor cabin is still better, and the transfer module can also be of more compact design. After all, it is not necessary anymore to provide a long, complex arm reaching from the bottom at the loading body all the way to the top above the transport vehicle. By advantageously setting the transfer module in the transfer position solely when the loading body has been tilted backward into the standing position, the transfer module is already higher and, in some cases, already sufficiently high to reach above the transport vehicle. As a consequence, the arm of the transfer arm can remain compact and limited in length, so that also the transfer length of crops is limited, so that transfer time can be shorter than when transfer is done from a low position, as in the prior art. By the adjusting device, the extension module can be adjusted with respect to the loading body; in particular, with the adjusting device, the fine adjustment of the module can be done with respect to the loading body, so that the extension module can be set substantially horizontally, for example, between an angle of approximately -5 degrees and approximately +5 degrees with respect to a horizontal, regardless of the angle at which the loading body is. Advantageously, the extension module comprises a frame, the frame being attachable to the loading body. In that case, preferably, between the loading body and the frame an adjusting device is provided to set a position, more particularly an angle, of the frame with respect to an angle of the loading body. By providing the coupling device with a quick-coupling element, for example, a hook element that can be hung over a shaft or pin, a quick and simple coupling can be obtained between the coupling device, or the frame, and the loading body. An adjusting device may be provided on the loading body and/or on the frame and/or between the loading body and the frame. Advantageously, the adjusting device is provided on the loading body, and it engages the frame as soon as the frame is coupled with the loading body.

The extension module is favorably provided with take-up elements to be capable of being taken up with a lifting device, for example, a forklift truck, to allow coupling of the module with the coupling device of the tipper. For example, the module is provided with insertion openings into which the fingers of a forklift truck can be inserted, so as to place the module on and off the frame and/or the tipper in a simple manner. Other take-up elements are also possible, for example, an eye to which a hook of a crane can be attached, etc. By providing such take-up elements, the module can be placed relatively easily on and off the frame and/or the tipper, so that it is a relatively small effort for the farmer to replace the module with a module for another field crop. This is of benefit to the versatility of the tipper.

In use, the extension module can be fitted on the loading body, for example, with a lifting device such as a forklift truck. When the extension module has been coupled with the loading body, the loading body can be tilted backwards with respect to the chassis with the aid of adjusting elements provided at the front side of the loading body. When the loading body has the desired position, the extension module can be adjusted by means of an adjusting device to an approximately horizontal position. After this, the flap or door at the front side of the loading body can be opened and the crops can move out of the loading body onto the extension module. Advantageously, the loading body is provided with a floor conveyor that can bring the crops to the front side of the loading body.

Preferably, the width of the module approximately corresponds to the width of the front side of the loading body and/or to the width of the frame as coupling device, so as to allow optimum use to be made of the opening provided at the front side of the loading body to allow the crops to be transferred. This can increase the transfer flow rate.

The extension module is preferably also provided with locking elements to lock the attachment of the extension module to the coupling device of the tipper so as to increase safety during use.

The invention further relates to an assembly of such a tipper and such an extension module. The assembly comprises a tipper, in particular a transfer cart or a self-propelled transfer cart, for field crops, comprising a chassis with at least one pair of locomotion elements; a loading body pivotable with respect to a rear side of the chassis; wherein at the front side of the loading body a coupling device is provided for detachably coupling an extension module, wherein the extension module is configured to cooperate with a coupling device of the tipper.

The transfer module is preferably a crop-specific transfer module such as a potato transfer module, or a beet transfer module, or a maize transfer module, or a grain module, or a vegetable module or a module for another specific crop.

The invention also relates to a farm combination of a tractor with an assembly.

The invention also relates to modularizing a tipper. By providing a tipper having a coupling device at the front side thereof, viewed in normal forward driving direction, different extension modules can be attached at the front side of the tipper, depending on the crop to be transferred. In this manner, the tipper can be modularized, and it can be deployed in a flexible and versatile manner.

An existing tipper can be retrofitted by providing it with a coupling device. Thus, the invention also relates to a method for retrofitting an existing tipper. Also, the invention relates to reusing a tipper for different types of field crops, by also providing different extension modules, which are use-specifically and/or crop-specifically configured. Depending on the crop to be transferred, the crop-specific module concerned can be attached on the tipper.

There is provided a set of a tipper, in particular a transfer cart, for field crops, comprising a chassis with at least one pair of locomotion elements; a loading body pivotable with respect to a rear side of the chassis; wherein the tipper at a front side thereof is provided with a tractor coupling for coupling with a tractor vehicle; wherein at the front side of the loading body a coupling device is provided for detachably coupling an extension module, and at least one extension module for attachment to the coupling device. The set as described above comprises an adjusting device for setting the extension module with respect to the loading body, so that the extension module can be positioned substantially horizontally regardless of the angle of the loading body. The loading body of the abovementioned set preferably comprises a floor conveyor for transporting crops in a longitudinal direction of the loading body, in particular in a forward direction, when the loading body is in the standing position. Advantageously, the loading body is merely pivotable around the rear side, and unloading of the loading body is always done via the front side. Preferably, the set comprises a plurality of extension modules and a tipper, wherein the extension modules are crop-depending, so that, depending on the crop, an assembly of a tipper with an extension module can be formed that is crop-specific.

Further advantageous embodiments are represented in the subclaims. The mere fact that particular features are represented in mutually different claims does not indicate that a combination of these features cannot be applied to advantage.

The invention will be further explained on the basis of an exemplary embodiment that is represented in a drawing. In the drawing,
Fig. 1a shows a schematic side view of a tipper with a transfer module as extension module according to a first exemplary embodiment;
Fig. 1b shows a schematic side view of the tipper with transfer module of Fig. 1a in the upward position;
Fig. 2a shows a schematic side view of a tipper with a transfer module according to a second exemplary embodiment;
Fig. 2b shows a schematic side view of the tipper with transfer module of Fig. 2a in the upward position;
Fig. 3 shows a schematic perspective view of a tipper with a transfer module according to a third embodiment;
Fig. 4a shows a schematic front view of the tipper of Fig. 3;
Fig. 4b shows a schematic side view of the tipper of Fig. 3;
Fig. 4c shows a schematic top plan view of the tipper of Fig. 3;
Fig. 5a shows a schematic front view of the tipper of Fig. 3 in the standing position with folded-in transfer arm;
Fig. 5b shows a schematic side view of the tipper of Fig. 5a;
Fig. 6a shows a schematic front view of the tipper of Fig. 3 in the standing position with folded-out transfer arm;
Fig. 6b shows a schematic side view of the tipper of Fig. 6a;
Fig. 7a shows a schematic exploded side view of the tipper of Fig. 3;
Fig. 7b shows detail A of Fig. 7a;
Fig. 7c shows detail B of Fig. 7a;
Fig. 8a shows a schematic side view of the tipper of Fig. 7a in assembled condition;
Fig. 8b shows detail A of Fig. 8a;
Fig. 8c shows detail B of Fig. 8a;
Fig. 9a shows a schematic side view of a tipper with a transfer module according to a fourth embodiment comprising a grain pipe in folded-in position;
Fig. 9b shows a schematic exploded side view of the tipper of Fig. 9a;
Fig. 10a shows a schematic front view of the tipper of Fig. 9a with the grain pipe in folded-out position;
Fig. 10b shows a schematic side view of the tipper of Fig. 10a.

In the figures, like or corresponding parts are designated with the same reference numerals. It is noted that the figures are only shown by way of exemplary embodiment and should not in any way be regarded as limiting.

For the sake of clarity and conciseness of the description, features are described as a part of the same or of different embodiments. However, it will be appreciated that the invention can also comprise embodiments that have a combination of any or all of the features described.

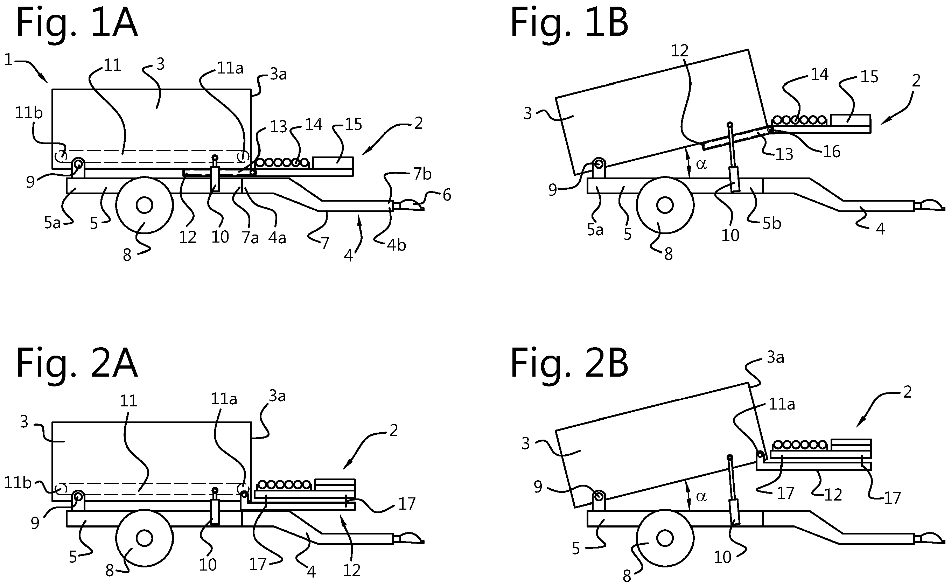

Figure 1a shows a schematic side view of a set of a tipper 1 with an extension module 2 implemented as a transfer module. The extension module 2 is here mounted on the tipper 1. The tipper 1 is typically a transfer cart for field crops and is provided with a loading body 3 into which the field crops can be loaded. Usually, during harvesting on the land, the field crops are loaded from the harvesting machine into the tipper implemented as a transfer cart. To this end, the transfer cart 1 can be moved along with the harvesting machine. When the loading body 3 of the transfer cart 1 is filled with field crops, the field crops can be transferred into a next conveying means, preferably a truck which can more easily transport the field crops over the road.

The transfer cart 1 is couplable with a tractor (not shown). To this end, the transfer cart 1 is equipped with a tractor coupling 4. The tractor coupling 4 is connected at one end with a chassis 5 of the transfer cart. At another, opposite end 4b of the tractor coupling 4 the tractor coupling 4 usually comprises a coupling element 6, for example a ball coupling 6, for coupling with a corresponding coupling on the tractor. In this exemplary embodiment the tractor coupling 4 comprises a pole 7 which at one end 7a thereof is connected with the chassis 5 and at another end 7b is provided with a - here: ball-type - coupling 6 which can couple with a known coupling on a tractor.

The tractor coupling 4 may also, in another exemplary embodiment, be implemented as a swan-neck coupling, of which one end 7b is implemented as a swan neck in order that a coupling element 6 can couple with a corresponding coupling element on the tractor. The tractor is usually implemented as a farm tractor.

The tipper 1 is provided with a chassis 5, with one or more axles on which locomotion elements 8 may be mounted. The chassis 5 may be provided in the known manner with adjusting elements to adjust the chassis 5 in order that the chassis 5 can be set, for example, horizontally, even on inclined ground. The locomotion elements 8 may be implemented as wheels 8 or as caterpillar tracks. Wheels 8 may, for example, be suspended in the known manner with a known three-point suspension. Many variants for the chassis, the wheels and the wheel suspension are possible.

The loading body 3 of the transfer cart 1 is mounted on the chassis 5 in an adjustable manner. The loading body 3 is pivotable with respect to a rear side 5a of the chassis 5. A hinge 9, schematically represented here, is provided at the rear side 5a of the chassis 5, around which the loading body 3 is pivotable. In the position shown in Figure 1a, the loading body 3 is in the lying position, and the loading body 3 is more or less parallel with respect to the chassis 5. In this position the loading body 3 can be loaded, or the transfer cart 1 can be transported over the road. The loading body 3 is adjustable between this lying position and a standing position, shown in Figure 1b, in which the loading body 3 is at an angle α with respect to the chassis 5. The maximum angle α, as maximum pivoting angle between the loading body 3 and the chassis 5, depends on the construction of the transfer cart 1, but is usually between about 15 and about 25 degrees, preferably about 20 degrees, more preferably about 17 degrees. The loading body 3 is preferably merely adjustable around the rear side 5a of the chassis 5 and preferably unloading of the loading body 3 is done merely via a front side 3a. The loading body 3 is advantageously adjustable to any position between the lying position and the standing position. The pivoting angle α through which the loading body 3 is pivoted depends on different factors, among others on the height of the container or loading body into which the field crops are transferred.

To adjust the loading body 3 between the lying position and the standing position, the transfer cart 1 is provided with adjusting elements 10 between the chassis 5 and the loading body 3. The adjusting elements 10 are advantageously situated at a front side 5b of the chassis 5, since the loading body 3 is pivotable with respect to the rear side 5a of the chassis 5. The adjusting elements 10 are advantageously implemented as hydraulic cylinders, for example, an adjusting element 10 is situated at each longitudinal side of the loading body 3. Alternatively and/or additionally, the adjusting elements may also be implemented as electric adjusting mechanisms, or as otherwise implemented adjusting mechanisms, such as a gear rack mechanism, etc. Many variants of adjusting mechanisms are possible.

Advantageously, the loading body 3 is provided at a front side 3a thereof with a door (not shown), for example a rolling door or a swinging door or a sliding door, which can be opened and via which the field crops can then be carried off out of the loading body 3. In the loading body 3, in a usual manner, a floor conveyor 11 is provided. The floor conveyor 11 is usually implemented as an endless belt which can circulate around at least two shafts. Here, at a front side 3a of the loading body 3 a first shaft 11a is provided and at a rear side 3b of the loading body 3 a second shaft 11b is provided, around which the endless belt 11 can circulate. The front side 3a and the rear side 3b are called so as being the respective sides of the loading body 3 viewed in the normal driving direction of the transfer cart 1, in the direction of the tractor coupling 4. The first shaft 11a and/or the second shaft 11b of the floor conveyor 11 may be driven shafts. Depending on the implementation, the floor conveyor 11 may be rotatable in two directions, forward and reverse, so that crops can be conveyed towards the front side 3a of the loading body 3 and/or towards the rear side 3b of the loading body 3. Should the floor conveyor 11 be drivable such that it can also convey crops towards the rear side 3b of the loading body 3, then it is desirable that at the rear side 3b of the loading body 3 also a door is provided via which the crops can be brought out of the loading body 3. For simplicity's sake, the floor conveyor 11 is represented schematically in Figure 1a and is omitted in the other figures.

At the front side of the transfer cart 1, viewed in the normal driving direction, i.e., in the direction of the tractor coupling 4, the transfer cart 1 is provided with a coupling device 12 for detachably coupling a transfer module 2. In the exemplary embodiment of Figure 1a and 1b the coupling device 12 is implemented as at least one elongate tube at the bottom of the loading body 3. For example, two, or three, elongate tubes 12 are provided at the bottom of the loading body 3, proportionally distributed across the width, or, for example, a tube on each longitudinal side of the bottom of the loading body 3. The elongate tube 12 is preferably implemented such that it can take up elongate prongs 13 of the module 2. In this manner, the module 2 can be slid into the coupling device 12, and thus be coupled with the loading body 3.

The module 2 in this exemplary embodiment is provided with a set of cleaning rollers 14 to clean the field crops, for example, to already clear them partially of soil and/or coarse leaves. Furthermore, this module 2 is implemented as a transfer module 2 and is provided with a fold-out transfer arm 15, which is shown here in a schematic side view in folded position. The transfer module 2 may also be provided with other elements, depending on the field crop that is to be transferred. For example, for potatoes and/or beets a set of cleaning rollers may be provided, but, for example, for maize, it may be desirable, rather, to apply a widest possible transfer arm without the necessity of cleaning rollers. Many variants are possible. Also, the transfer module 2 may be implemented as a container module that fits onto the loading body 3 and can be in communication with it, thereby enlarging the loading volume of the loading body 3. Also, the transfer module may be implemented without cleaning rollers, having, for example, merely a transfer arm. The transfer arm may then, for example, abut directly against the front side of the loading body.

In the standing position of the loading body 3, when the loading body 3 is at an angle α with respect to the chassis 5, the field crops can be brought via the front side 3a of the loading body 3 out of the loading body 3. The floor conveyor 11 can convey the field crops towards the front side of the loading body 3, whereupon the field crops are brought through an opened door from the front side 3a of the loading body 3 onto the transfer module 2. Depending on the implementation of the transfer module 2, the field crops are first passed over a set of cleaning rollers 14, whereupon they can be passed onto a transfer arm 15. The transfer arm 15, in folded-out position, can bring the field crops into a container or loading body of a ready transport vehicle, such as a truck. To that end, in a known manner, the transfer arm 15 is equipped with a roller conveyor. The cleaning rollers 14 also may or may not be driven. Any driving mechanisms for the transfer arm and/or cleaning rollers and/or other elements on the module are preferably on the module 2 itself, so that the module is simple to couple to and uncouple from the loading body 3. The transfer arm 15 is here shown in the folded-in position, for reasons of conciseness and clarity.

As shown in Figure 1b, the module 2 itself is of adjustable configuration. Here, the module 2 is adjustable between a position in which it extends in line with the loading body 3 when the loading body 3 is in the lying position, as shown in Figure 1a. Thus, the module 2 can be simply transported along with the transfer cart 1. When the loading body 3 is in the standing position, and is at an angle α with respect to the chassis 5, the module 2 can be pivoted, for example through a corresponding angle α, in order that the module 2 can be approximately parallel to the chassis 5. For example, the module 2 is positioned approximately horizontally so that the field crops can be transported relatively simply in the desired direction.

In a simple embodiment, the module 2 is adjustable between the two positions through the maximum angle α. To this end, an adjusting device is provided. In a more elaborate embodiment, the module 2 can be adjustable between the two positions through any angle, thereby allowing the optimum position of the transfer module 2 to be set with respect to the loading body. In the exemplary embodiment of Figure 1a and Figure 1b, the module 2 is adjustable around a hinge point 16 between the prongs 13 of the module 2 and a projecting part of the module 2.

The exemplary embodiment shown in Figure 2a and Figure 2b is for the most part similar to the exemplary embodiment of Figure 1a and Figure 1b. In Figure 2a and Figure 2b, however, the coupling device 12 is implemented differently. The coupling device 12 here comprises a frame 12, which frame 12 is configured for detachably receiving a transfer module 2. The frame 12 is attached at the front side 3a of the loading body 3. The frame 12 extends from the loading body 3, forwardly, so that it is above the pole 7 of the tractor coupling 4. Thus, the transfer cart 1 can be coupled to the tractor unhindered by the coupling device 12 and/or the transfer module 2.

Preferably, the coupling device 12 - here being the frame 12, in Figures 1a and 1b the tubes 12 - is fixedly, as in non-detachably, connected with the loading body 3, more preferably the coupling device 12 is adjustably, for example pivotally or hingedly, connected with the loading body 3.

In this exemplary embodiment of Figures 2a and 2b, the frame 12 is adjustably connected with the loading body 3, and the frame 12 is adjustable around the front shaft 11a of the floor conveyor 11 which is in the loading body 3. By configuring the frame 12 to be adjustable around the front shaft 11a of the floor conveyor 11, the distance between the module 2, attached on the frame 12, and the floor conveyor 11 remains substantially equal during adjustment. Due to the distance between the floor conveyor 11 and the module 2 remaining substantially equal during adjustment of the frame 12, the crops can be transferred from the floor conveyor 11 onto the module 2 without such crops falling through as a result of a gap arising between the module 2 and the floor conveyor 11 during adjustment.

Advantageously, between the frame 12 and the loading body 3, an adjusting device is provided to adjust the frame 12 with respect to the loading body 3. The adjusting device can be, for example, hydraulic or pneumatic cylinders or an electric motor, or may also be implemented as a gearwheel or a gear rack in which a finger, pawl or a pinion can engage. Many variants are possible. By providing the adjusting device, the frame 12 can be put in an optimum position with respect to the loading body 3 during operation, for example during transfer, in particular when the loading body 3 is tilted.

The transfer module 2 is detachably attachable onto the frame 12. To this end, preferably, the frame 12 is provided with fastening elements that cooperate with corresponding fastening elements on the module 2. The fastening elements 17 may for instance be implemented as a pin-and-hole connection or as a bolt-nut connection or as a twist-lock or similar joint. Many variants of fastening elements are possible.

The transfer module 2 is advantageously configured in a manner depending on the crop to be transferred, and is thus crop-specifically implemented. Depending on the field crop that is to be transferred, for example, potatoes, maize, beets, beans, carrots, cabbages, etc., the module 2 is provided with different elements. For example, a module 2 may be provided with a transfer arm 15 that extends throughout the length of the module 2, the cleaning rollers 14 can then be omitted. Another module 2 may be provided with different cleaning rollers 14, for example, positioned at a different distance from each other or provided with a different cleaning roller surface. The transfer arm 15 too may be of a different design depending on the field crop to be transferred, for example of wider or narrower design, or designed with a different roller conveyor or be drivable at a different speed, etc. Thus, a modular transfer cart 1 can be obtained, which the farmer can put to versatile use, preferably for different crops. Depending on the field crop that is being harvested and is to be transferred, thus, different crop-specific modules 2 can be attached on the transfer cart 1. In this way, the transfer cart 1 can be employed on the land for a longer period of time, rendering it more economically employable.

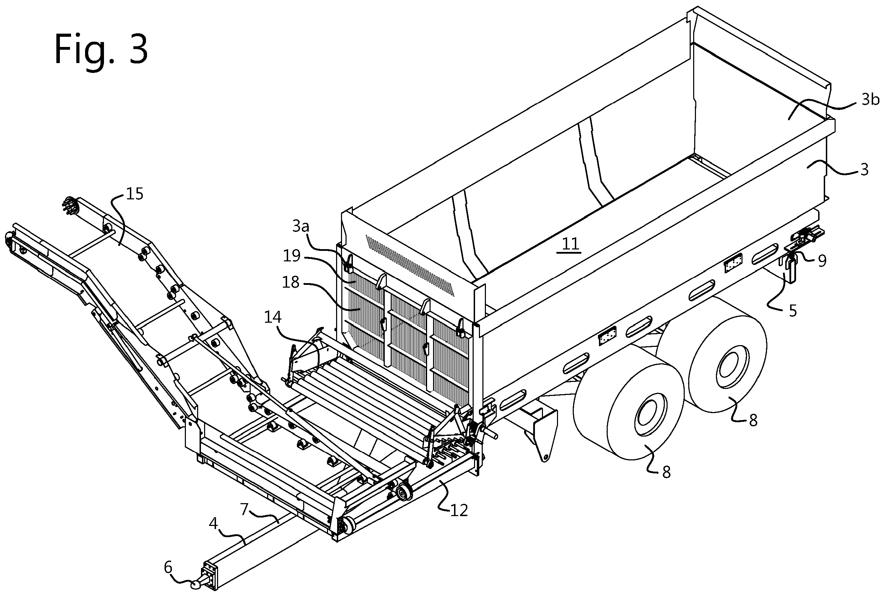

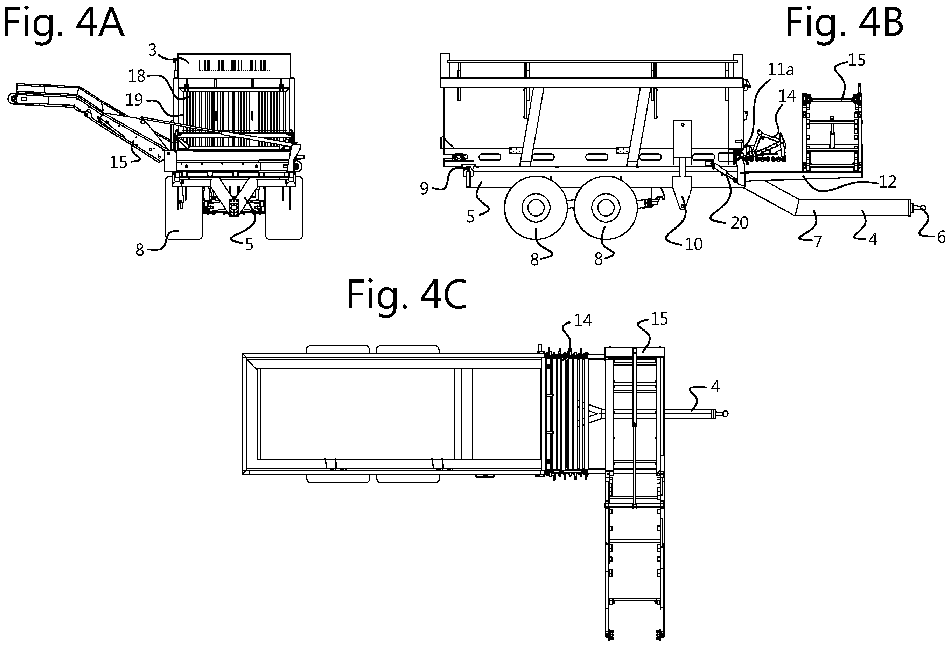

The exemplary embodiment of Figure 3 and Figures 4a, 4b, 4c shows a further variant of the modular transfer cart 1 with a transfer module 2. Here the transfer cart 1 is implemented with a chassis 5 on which two sets of wheels 8 are provided. The loading body 3 is adjustable with respect to the chassis 5 around a hinge 9 at the rear side 3b of the loading body 3. The adjusting element 10, here implemented as an adjusting cylinder 10, is at the front side 3a of the loading body 3 on one side of the loading body 3. The adjusting cylinder 10 can adjust the loading body 3 between the lying position, as shown in Figures 3, 4a, 4b, 4c and a standing position, in which the front side 3a of the loading body 3 is at a distance from the chassis 5. The loading body 3 is then at an angle α with respect to the chassis 5.

The front side 3a of the loading body 3 is provided with a door 18. This door 18 may be implemented as a rolling door and can close off, or open, an opening 19 at the front side 3a of the loading body 3. When the door 18 is open, field crops can be passed outside through the opening 19.

The transfer cart 1 is provided with a coupling device 12, here implemented as a frame 12 that is attached to the loading body 3. The frame 12 is adjustably attached to the loading body 3, and is adjustable around the front shaft 11a of the floor conveyor 11. In Figure 4b it can be seen that the adjusting device, comprising adjusting elements 20, here implemented as hydraulic or pneumatic cylinders, is provided to adjust the frame 12 with respect to the loading body 3. The adjusting elements 20 can be connected with the frame 12 and can set the angle of the frame 12 with respect to the loading body by lengthening or shortening the adjusting element. The frame 12 is preferably suspended hingeably around a hinge adjacent the front shaft 11a of the floor conveyor 11. This is especially advantageous when the loading body 3 is in the standing position, to set the position of the frame 12 with respect to the loading body 3 so that the frame 12 and/or the module 2 attached thereon can be set approximately horizontally.

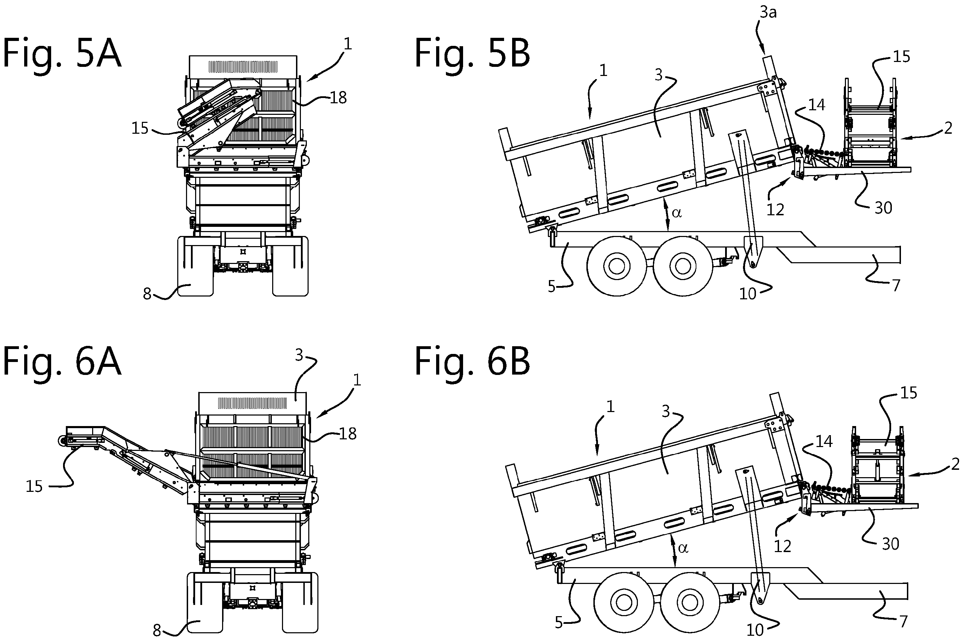

The module 2 here comprises a set of cleaning rollers 14 and a transfer arm 15. The transfer arm 15 is capable of being folded out, with Figures 3, 4a, 4b and 4c showing the transfer arm 15 in the folded-out position. Also in Figures 5a and 5b, the tipper 1 is shown with a transfer arm 15 in the folded-in position, with the loading body 3 in the standing position. As shown in Figures 6a and 6b, the transfer arm 15 in the folded-out position extends in a direction transverse to the normal driving direction of the transfer module 1, in a sideways direction. When the loading body 3 is in the standing position and the transfer arm 15 in the folded-out position, as shown in Figures 6a and 6b, the transfer arm 15 can extend over and above a loading body or container of a truck with which the crops may be conveyed further. Depending on the truck, the desired height of the transfer arm 15 can be up to four meters or more. The transfer arm 15 is provided in the known manner with a roller conveyor to convey the crops to the end of the transfer arm 15.

The set of cleaning rollers 14 and the transfer arm 15 may be detachably attached on a cassette 30 with fastening elements that fit into corresponding fastening elements of the cassette 30. The cassette 30 can be attached to the loading body 3 through the coupling device 12. The set of cleaning rollers 14 and the transfer arm 15 can be detachably placed on the cassette 30 as one whole, so that they can be placed on the cassette as a single entity and can also be detached from it as a single entity. Alternatively, the set of cleaning rollers 14 and the transfer arm 15 may also be fixedly attached on the cassette 30, the cassette 30 becoming part of the module 2 which is then itself detachably attachable to the loading body 3, via a coupling device such as for example a hook, snap or bolt connection. To that end, the module 2 may for instance be provided with take-up elements, not shown here, by which the module 2 can be grasped, for example with a forklift truck or a crane, thus allowing it to be placed quickly and easily on and off the loading body 3 in a simple manner. By providing a cassette, the extension module 2 and/or the transfer cart 1 can be rendered still more modular. Thus, for example, there may be provided a cassette on which thereupon different elements that are needed depending on the crop, can be fitted. The cassette may be provided with take-up elements for it to be placed on and off the transfer cart by means of a crane or forklift truck or other device.

Optionally, the module 2 itself may also be configured to be adjustable with respect to the coupling device 12, or the coupling device 12 itself may be configured to be adjustable, so that in the standing position of the loading body 3, the module 2 can be placed in the desired relative position.

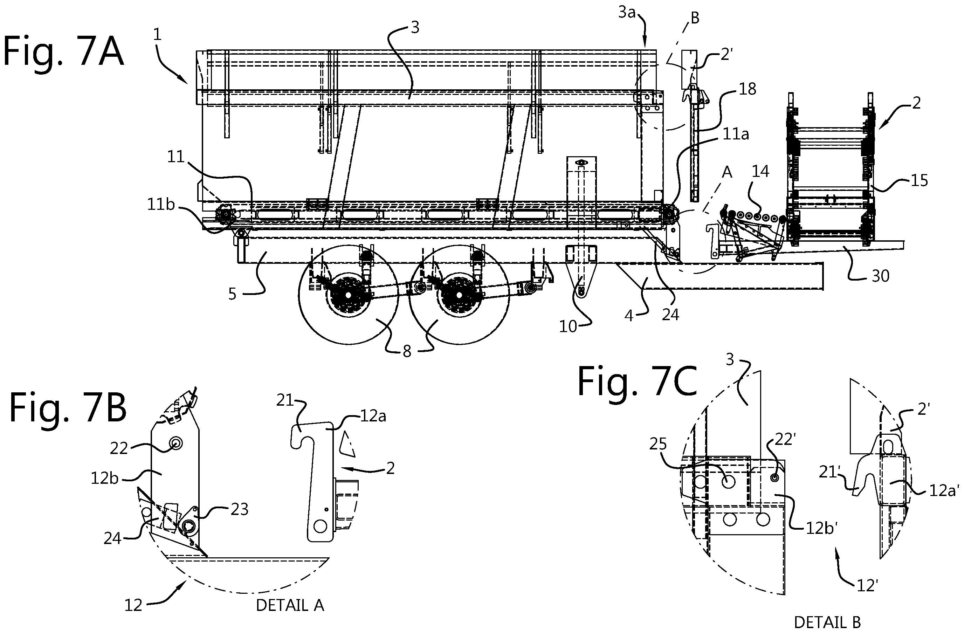

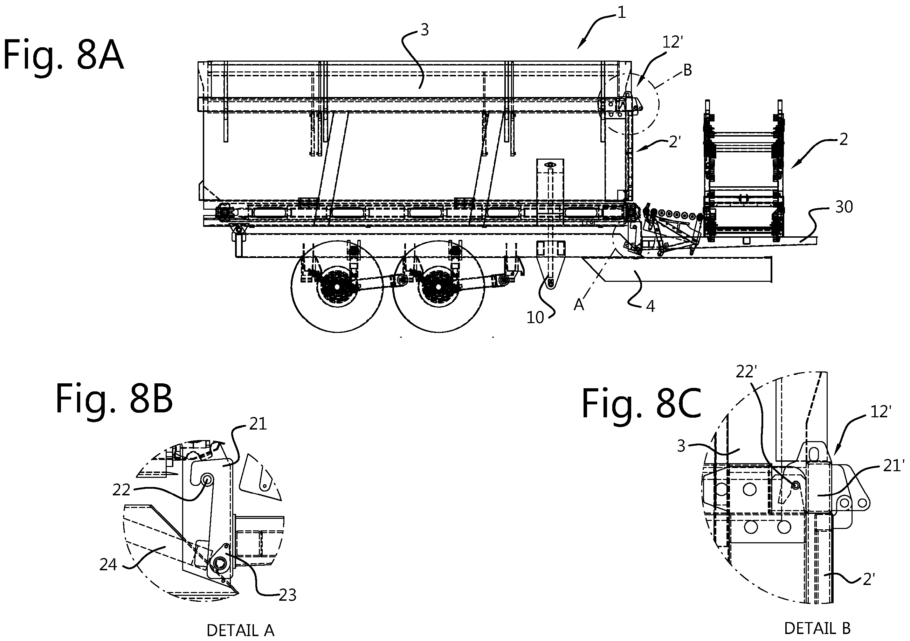

Figure 7a shows the tipper 1 with a first extension module 2, which is attachable at the lower side of the front side 3a of the loading body 3, and with a second extension module 2', which is attachable at an upper side of the front side 3a of the loading body 3. Figures 7a, 7b and 7c show the first extension module 2 and the second extension module 2' in exploded view. Figures 8a, 8b, 8c show the first extension module 2 and the second extension module 2' in assembled condition. The first extension module 2 is implemented as a transfer module comprising cleaning rollers 14 and a transfer arm 15. The second extension module 2' is here implemented as a door module, comprising the door 18 which can open or close off an opening 19 at the front side 3a of the loading body 3. The door module 2' is here attachable via a coupling device 12' at the upper side of the front side 3a of the loading body 3. The transfer module 2 is attachable via a coupling device 12 at a lower side of the front side 3a of the loading body. Detail A shows a detail of the coupling device 12, implemented as a hook connection. The coupling device 12 here comprises a first coupling part 12a which is here provided with a hook element 21 and is on the module 2. The coupling device 12 further comprises a second coupling part 12b which is on the loading body 3. In the second coupling part 12b a shaft or a pin 22 is provided, around which the hook element 21 can be hooked. Thus, a quick-coupling is obtained, merely requiring the frame 12 to be hung over the pin 22. This can be done fast and easily, for example, with a forklift truck.

The second coupling part 12b in this exemplary embodiment is adjustably attached to the loading body 3, in particular around the front shaft 11a of the roller conveyor 11. To this end, the second coupling part 12b is provided with an adjusting device comprising an adjusting cylinder 24 which, when the tipper 1 is in the standing position, as well as in the lying position, can adjust the second coupling part 12b with respect to the loading body 3 around the shaft or pin 22 to set the position of the module 2 in the desired relative position. Due to the first coupling part 12a then coupling with the second coupling part 12b, as shown in Figures 7 and 8, while the second coupling part 12b is provided with an adjusting element 24, the frame 12 can be adjusted around the shaft or pin 22 adjacent the front return shaft 11a of a floor conveyor 11.

Thus, the frame 12 can also be adjusted, for example, between an angle of approximately -5 degrees up to approximately +5 degrees with respect to a horizontal. Which can mean that the frame 12 can be adjusted through an angle of approximately 25 degrees with respect to the loading body 3. For example, when the loading body 3 is tilted backwards through approximately an angle of 20 degrees with respect to the chassis, and thereupon the frame 12 is adjusted to an approximately horizontal position, to approximately an angle of -5 degrees, the frame 12 has an overall adjustment of approximately 25 degrees. Advantageously, the frame 12 can be adjusted to approximately -5 degrees with respect to a horizontal, for example, approximately -2 degrees, so that the crops move towards the conveyor belt more readily.

There may be provided a locking element 23 on the coupling part 12b for locking of the coupling part 12a of the module 2 with the loading body 3. The locking element 23 may for example be provided with openings which, when the coupling part 12a is coupled with the coupling part 12b, correspond with openings of the coupling part 12a, through which bolts or other fastening elements can then be inserted. Other locking possibilities are obviously available as well, for example providing a pivoting element which, when not locked, projects sideways and thus also gives the user a visual indication that there is no locking yet. The pivoting element can then, when locked, be pivoted inwards to effect locking, for example in that it falls - partly - into an opening or recess of the coupling device 12. Thus, the user can also establish visually that the locking has been effected. To that end, the pivoting element may for instance be provided with visual indication means such as a flag or a lamp.

The embodiment of Figures 7 and 8 is further provided with a second extension module 2', which is here implemented as a door module comprising a door 18. The door module 2' is attachable to an upper side of the front side 3a of the loading body 3 with a coupling device 12'. The coupling device 12' likewise has a first coupling part 12a' provided with a hook element 21' and a second coupling part 12b' provided with a shaft or pin 22' around which the hook element 21' can be hooked. The second coupling part 12b' is attached to the loading body 3, and the first coupling part 12a' is attached to the door module 2'. With this coupling device 12' too, locking elements may be provided. The front side 3a of the loading body 3 is further provided with reinforcements 25 to be able to carry the module 2'.

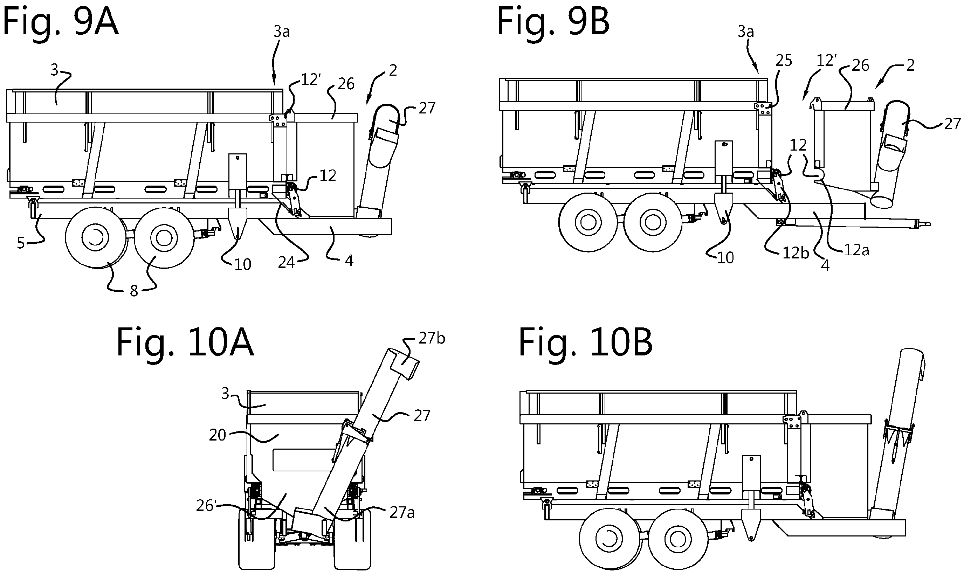

The extension module 2 may also be provided with a volume body 26 with a grain pipe connected thereto, as shown by way of example in Figures 9a, 9b, 10a, 10b. The grain module 2 is attachable to the loading body 3 with the coupling device 12 at the bottom of the front side 3a of the loading body 3 and with the coupling device 12' at the top of the front side 3a of the loading body 3. The coupling device 12 and the coupling device 12' are implemented as described with reference to Figures 7 and 8. The volume body 26 is preferably substantially as wide as the loading body 3, thereby allowing optimum use to be made of the full supply width of the floor conveyor 11 of the loading body 3. At the bottom, the volume body 26 is funnel-shaped as a funnel 26', the funnel 26' terminating in an inlet 27a of the grain pipe 27. The grain pipe is shown in Figure 10a and Figure 10b in the folded-out position, with an end 27b of the grain pipe 27 extending upwards and sideways of the loading body 3. Thus, the end 27b of the grain pipe 27 may for instance be above a loading body or container of a truck into which the grain or other granular crop can be transferred. In Figure 9a and Figure 9b the grain pipe 27 is shown in folded condition and the folded grain pipe 27 is substantially within the width of the loading body 3, so that stowage and transport of the module 2 is more easily possible.

By providing a tipper 1 with a coupling device 12, and a module 2 couplable therewith, it can be simply transformed into a modular tipper 1, which can offer the farmer more possibilities. Depending on the crops that the farmer wishes to harvest, he can provide crop-specific modules 2. In harvesting and transferring a particular field crop, the farmer can then attach the desired crop-specific module 2 onto the tipper 1. In consequence, instead of having to provide different tippers, one for each crop, as is currently the case, the farmer only needs to provide one modular tipper 1 and a number of transfer modules 2, which is much more economic. A number of crop-specific modules have been shown in the foregoing; obviously, more and other variants of modules are possible.

The invention has been explained on the basis of a tipper, more specifically a transfer cart, which is suitable to be pulled by a tractor vehicle such as a tractor. However, it will be clear to those skilled in the art that the invention can also be applied to a self-propelled transfer cart. In particular, a self-propelled transfer cart may be provided with a chassis with at least one pair of locomotion elements; a loading body pivotable with respect to a rear side of the chassis; wherein at the front side of the loading body a coupling device is provided for detachably coupling an extension module. The self-propelled transfer cart is further provided with a drive of its own, comprising, for example, a combustion engine or an electric motor. The self-propelled transfer cart may for instance be provided with a steering cabin which is usually at the front side of the self-propelled transfer cart, forward of the pivotable loading body. The coupling device for the extension module is at the front side of the loading body, viewed in the normal driving direction, hence at the side of the loading body facing the steering cabin. In use, the extension module will be between the loading body and the steering cabin. All aspects described hereinabove on the basis of a tipper also apply to a self-propelled tipper and will not be repeated here for reasons of clarity and conciseness.

The description and drawings should be regarded as illustrative and are not intended to limit the scope of protection of the appended claims. Many variants are possible and are understood to fall within the scope of the invention as defined in the following claims.

## Claims

1. A tipper (1), in particular a transfer cart, for field crops, comprising
- a chassis (5) with at least one pair of locomotion elements (8);
- a loading body (3) pivotable with respect to a rear side (5a) of the chassis (5);
- wherein the tipper (1) at a front side thereof is provided with a tractor coupling (4) for coupling with a tractor vehicle, or wherein the tipper (1) is provided as a self-propelled transfer cart with a drive of its own; **characterised in that** at the front side (3a) of the loading body (3) a coupling device (12) is provided for detachably coupling an extension module (2), further comprising an adjusting device to adjust the extension module (2) with respect to the loading body (3), so that the extension module (2) can be set substantially horizontally, regardless of the angle (α) at which the loading body (3) is.

2. The tipper (1) according to claim 1, wherein the coupling device (12) comprises a first coupling part (12a) which is arranged on the extension module (2) and a second coupling part (12b) which is provided on the loading body (3), preferably wherein the coupling device (12) is above the tractor coupling (4).

3. The tipper (1) according to claim 1 or 2, wherein at the front side of the tipper an adjusting element (10), such as a cylinder, is provided to adjust the loading body (3) with respect to the chassis (5), wherein the loading body (3) is adjustable between a lying position in which the loading body (3) rests on the chassis (5), and a standing position, in which the loading body (3) is at an angle with respect to the chassis (5).

4. The tipper (1) according to any one of the preceding claims, wherein the extension module (2) extends substantially throughout the width of the loading body (3) and/or wherein the extension module (2) is provided with fastening elements (17) which are configured to cooperate with corresponding fastening elements of the coupling device (12).

5. The tipper (1) according to any one of the preceding claims, wherein the coupling device (12) comprises a frame which is adjustably attachable to the loading body (3), preferably wherein the coupling device (12) is adjustable around a front shaft (11a) of a floor conveyor (11) of the loading body (3).

6. An extension module (2) for attachment to a coupling device (12) at the front side of a tipper (1) according to any one of claims 1-5, wherein the extension module (12) is configured to cooperate with a coupling device (12) of the tipper (1), wherein the extension module is adjustable with respect to the loading body (3) of the tipper (1), so that the extension module (2) can be set substantially horizontally, regardless of the angle (α) at which the loading body (3) is.

7. The extension module according to claim 6, wherein the extension module (2) is detachably attachable to the tipper (1).

8. The extension module (2) according to claim 6 or 7, wherein the extension module (2) is a transfer module which comprises a fold-out transfer arm (15), wherein the transfer arm can be folded out between a folded-in position, and a folded-out position in which the arm extends beyond the module.

9. The extension module (2) according to any one of claims 6-8, wherein the extension module (2) is provided with crop-depending devices, such as cleaning rollers, transfer arm, grain pipe, etc., depending on the crop to be transferred.

10. The extension module (2) according to any one of claims 6-9, wherein the extension module (2) is a door module for detachably attaching a door (18) to the loading body (3), preferably wherein the extension module (2) is a door module that is exchangeable for a further extension module.

11. The extension module (2) according to any one of claims 6-10, wherein the extension module (2) is provided with take-up elements to be capable of being taken up with a lifting device, for example a forklift truck, to allow the module to be coupled with the coupling device (12) of the tipper (1).

12. The extension module (2) according to any one of claims 6-11, wherein a width of the module corresponds to a width of a frame and/or of a loading body (3) of the tipper (1).

13. The extension module (2) according to any one of claims 6-12, furthermore comprising locking elements for locking the extension module (2) with the tipper (1).

14. A set of a tipper (1) according to any one of claims 1-5 and at least one extension module (2), according to any one of claims 6-13, for attachment to the coupling device (12).

15. The set according to claim 14, wherein the loading body (3) comprises a floor conveyor (11) for transporting crops in a longitudinal direction of the loading body (3), in particular in a forward direction.

16. The set according to any one of claims 14 - 15, wherein the loading body (3) is merely pivotable around the rear side (3b), furthermore unloadable via the front side (3a) of the loading body (3).

17. The set according to any one of claims 14-16, wherein the set comprises a plurality of extension modules (2) and a tipper (1), wherein the extension modules (2) are crop-depending, so that depending on the crop an assembly of a tipper (1) with an extension module can be formed that is crop-specific, preferably wherein a crop-depending extension module (2) is one of a potato transfer module, a beet transfer module, a maize transfer module, a grain module, a vegetable module.

18. An assembly comprising a tipper (1) according to any one of claims 1-5 and an extension module (2) according to any one of claims 6-13 wherein the extension module is detachably coupled to the coupling device of the tipper.

19. The assembly according to claim 18, wherein a crop-depending extension module (2), such as a potato transfer module, or a beet transfer module, or a maize transfer module, or a grain module, or a vegetable module, etc., is coupled to the tipper (1).

20. A farm combination comprising a tractor provided with a tractor coupling (4) for coupling with a farm tipper (1) and an assembly according to one of claims 18-19.

21. A method for modularizing a tipper (1), comprising
- providing a tipper (1) according to claim 1, having a loading body (3) pivotable around a rear side (5a) of the tipper;
- providing a coupling device (12) at a front side (3a) of the loading body (3); wherein the coupling device (12) is configured for detachably coupling an extension module (2).

22. A method for retrofitting an existing tipper (1) with a loading body (3) pivotable around a rear side (5a) of the tipper (1); comprising providing a tipper according to the pre-amble of claim 1; and providing: a coupling device (12) at a front side (3a) of the loading body (3), wherein the coupling device (12) is configured for detachably coupling an extension module (2); and providing an adjusting device to adjust the extension module (2) with respect to the loading body (3), so that the extension module (2) can be set substantially horizontally, regardless of the angle (α) at which the loading body (3) is.

23. A method for reusing a tipper (1) for transferring different types of field crops; comprising
- providing a tipper (1) according to any one of claims 1-5;
- providing at least two extension modules (2) according to any one of claims 6-13, wherein each extension module (2) is use-specifically configured;
- selecting a crop-specific extension module (2) from the at least two use-specific extension modules (2).

## Patentansprüche

1. Kipper (1), insbesondere Transportwagen, für Feldfrüchte, umfassend
- ein Fahrgestell (5) mit wenigstens einem Paar von Fortbewegungselementen (8);
- einen Ladekörper (3), der in Bezug auf eine Rückseite (5a) des Fahrgestells (5) schwenkbar ist;
- wobei der Kipper (1) an seiner Vorderseite mit einer Traktorkupplung (4) zum Ankuppeln an einen Traktor versehen ist, oder wobei der Kipper (1) als selbstfahrender Transportwagen mit eigenem Antrieb bereitgestellt ist; **dadurch gekennzeichnet, dass** an der Vorderseite (3a) des Ladekörpers (3) eine Kupplungsvorrichtung (12) zum lösbaren Ankuppeln eines Erweiterungsmoduls (2) bereitgestellt ist, ferner umfassend eine Verstellvorrichtung zum Verstellen des Erweiterungsmoduls (2) in Bezug auf den Ladekörper (3), so dass das Erweiterungsmodul (2) im Wesentlichen horizontal eingestellt werden kann, unabhängig von dem Winkel (a), in dem sich der Ladekörper (3) befindet.

2. Kipper (1) nach Anspruch 1, wobei die Kupplungsvorrichtung (12) ein erstes Kupplungsteil (12a), das am Erweiterungsmodul (2) angeordnet ist, und ein zweites Kupplungsteil (12b), das am Ladekörper (3) bereitgestellt ist, umfasst, wobei sich die Kupplungsvorrichtung (12) vorzugsweise über der Traktorkupplung (4) befindet.

3. Kipper (1) nach Anspruch 1 oder 2, wobei an der Vorderseite des Kippers ein Verstellelement (10), wie ein Zylinder, bereitgestellt ist, um den Ladekörper (3) in Bezug auf das Fahrgestell (5) zu verstellen, wobei der Ladekörper (3) zwischen einer Liegeposition, in der der Ladekörper (3) auf dem Fahrgestell (5) aufliegt, und einer Stehposition, in der der Ladekörper (3) in einem Winkel in Bezug auf das Chassis (5) befindet, verstellbar ist.

4. Kipper (1) nach einem der vorhergehenden Ansprüche, wobei sich das Erweiterungsmodul (2) im Wesentlichen über die gesamte Breite des Ladekörpers (3) erstreckt und/oder wobei das Erweiterungsmodul (2) mit Befestigungselementen versehen ist (17), die dazu ausgelegt sind, mit entsprechenden Befestigungselementen der Kupplungsvorrichtung (12) zusammenzuwirken.

5. Kipper (1) nach einem der vorhergehenden Ansprüche, wobei die Kupplungsvorrichtung (12) einen Rahmen umfasst, der verstellbar an dem Ladekörper (3) angebracht werden kann, wobei die Kupplungsvorrichtung (12) vorzugsweise um eine vordere Welle (11a) eines Flurförderers (11) des Ladekörpers (3) verstellbar ist.

6. Erweiterungsmodul (2) zum Anbringen an eine Kupplungsvorrichtung (12) an der Vorderseite eines Kippers (1) nach einem der Ansprüche 1 bis 5, wobei das Erweiterungsmodul (12) dazu ausgelegt, um mit einer Kupplungsvorrichtung (12) des Kippers (1) zusammenzuwirken, wobei das Erweiterungsmodul in Bezug auf den Ladekörper (3) des Kippers (1) verstellbar ist, so dass das Erweiterungsmodul (2) im Wesentlichen horizontal eingestellt werden kann, unabhängig von dem Winkel (a), in dem sich der Ladekörper (3) befindet.

7. Erweiterungsmodul nach Anspruch 6, wobei das Erweiterungsmodul (2) am Kipper (1) lösbar angebracht werden kann.

8. Erweiterungsmodul (2) nach Anspruch 6 oder 7, wobei das Erweiterungsmodul (2) ein Übergabemodul ist, das einen ausklappbaren Übergabearm (15) umfasst, wobei der Übergabearm zwischen einer zusammengeklappten Position und einer ausgeklappten Position, in der sich der Arm über das Modul hinaus erstreckt, ausgeklappt werden kann.

9. Erweiterungsmodul (2) nach einem der Ansprüche 6 bis 8, wobei das Erweiterungsmodul (2) mit erntegutabhängigen Vorrichtungen, wie Reinigungswalzen, Übergabearm, Getreiderohr usw., abhändig von dem zu übergebenden Erntegut versehen ist.

10. Erweiterungsmodul (2) nach einem der Ansprüche 6 bis 9, wobei das Erweiterungsmodul (2) ein Türmodul zum lösbaren Anbringen einer Tür (18) am Ladekörper (3) ist, wobei das Erweiterungsmodul (2) vorzugsweise ein Türmodul ist, das gegen ein weiteres Erweiterungsmodul austauschbar ist.

11. Erweiterungsmodul (2) nach einem der Ansprüche 6 bis 10, wobei das Erweiterungsmodul (2) mit Aufnahmeelementen versehen ist, um mit einer Hebevorrichtung, zum Beispiel einem Gabelstapler, aufgenommen werden zu können, um das Ankuppeln des Moduls an die Kupplungsvorrichtung (12) des Kippers (1) zu ermöglichen.

12. Erweiterungsmodul (2) nach einem der Ansprüche 6 bis 11, wobei eine Breite des Moduls einer Breite eines Rahmens und/oder eines Ladekörpers (3) des Kippers (1) entspricht.

13. Erweiterungsmodul (2) nach einem der Ansprüche 6 bis 12, ferner umfassend Verriegelungselemente zum Verriegeln des Erweiterungsmoduls (2) mit dem Kipper (1).

14. Satz aus einem Kipper (1) nach einem der Ansprüche 1 bis 5 und wenigstens einem Erweiterungsmodul (2), nach einem der Ansprüche 6 bis 13, zum Anbringen an der Kupplungsvorrichtung (12).

15. Satz nach Anspruch 14, wobei der Ladekörper (3) einen Flurförderer (11) zum Transportieren von Erntegut in Längsrichtung des Ladekörpers (3), insbesondere in Vorwärtsrichtung, umfasst.

16. Satz nach einem der Ansprüche 14 bis 15, wobei der Ladekörper (3) lediglich um die Rückseite (3b) schwenkbar, ferner über die Vorderseite (3a) des Ladekörpers (3) entladbar ist.

17. Satz nach einem der Ansprüche 14 bis 16, wobei der Satz mehrere Erweiterungsmodule (2) und einen Kipper (1) umfasst, wobei die Erweiterungsmodule (2) erntegutabhängig sind, so dass abhändig vom Erntegut eine Baugruppe aus einem Kipper (1) mit einem erntegutspezifischen Erweiterungsmodul gebildet werden kann, wobei ein erntegutabhängiges Erweiterungsmodul (2) vorzugsweise ein Kartoffelübergabemodul oder ein Rübenübergabemodul, oder ein Maisübergabemodul, oder ein Getreidemodul, oder ein Gemüsemodul ist.

18. Baugruppe, die einen Kipper (1) nach einem der Ansprüche 1 bis 5 und ein Erweiterungsmodul (2) nach einem der Ansprüche 6 bis 13 umfasst, wobei das Erweiterungsmodul an die Kupplungsvorrichtung des Kippers lösbar angekuppelt ist.

19. Baugruppe nach Anspruch 18, wobei ein erntegutabhängiges Erweiterungsmodul (2), wie ein Kartoffelübergabemodul oder ein Rübenübergabemodul, oder ein Maisübergabemodul, oder ein Getreidemodul, oder ein Gemüsemodul usw., an den Kipper (1) angekuppelt ist.

20. Landwirtschaftliche Kombination, die einen Traktor, der mit einer Traktorkupplung (4) zum Ankuppeln an einen landwirtschaftlichen Kipper (1) versehen ist, und eine Baugruppe nach einem der Ansprüche 18 bis 19 umfasst.

21. Verfahren zum Modularisieren eines Kippers (1), umfassend:
- Bereitstellen eines Kippers (1) nach Anspruch 1 mit einem Ladekörper (3), der um eine Rückseite (5a) des Kippers schwenkbar ist;
- Bereitstellen einer Kupplungsvorrichtung (12) an einer Vorderseite (3a) des Ladekörpers (3); wobei die Kopplungsvorrichtung (12) zum lösbaren Ankuppeln eines Erweiterungsmoduls (2) ausgelegt ist.

22. Verfahren zum Nachrüsten eines bestehenden Kippers (1) mit einem um eine Rückseite (5a) des Kippers (1) schwenkbaren Ladekörper (3); umfassend das Bereitstellen eines Kippers nach der Präambel von Anspruch 1; und Bereitstellen: einer Kupplungsvorrichtung (12) an einer Vorderseite (3a) des Ladekörpers (3), wobei die Kupplungsvorrichtung (12) zum lösbaren Ankuppeln eines Erweiterungsmoduls (2) ausgelegt ist; und Bereitstellen einer Verstellvorrichtung zum Verstellen des Erweiterungsmoduls (2) in Bezug auf den Ladekörper (3), so dass das Erweiterungsmodul (2) im Wesentlichen horizontal eingestellt werden kann, unabhängig von dem Winkel (a), in dem der Ladekörper (3) ist.

23. Verfahren zur Wiederverwendung eines Kippers (1) zum Übergeben verschiedener Arten von Feldfrüchten; umfassend
- Bereitstellen eines Kippers (1) nach einem der Ansprüche 1 bis 5;
- Bereitstellen von wenigstens zwei Erweiterungsmodulen (2) nach einem der Ansprüche 6 bis 13, wobei jedes Erweiterungsmodul (2) anwendungsspezifisch ausgelegt ist;
- Auswählen eines erntegutspezifischen Erweiterungsmoduls (2) aus den wenigstens zwei anwendungsspezifischen Erweiterungsmodulen (2).

## Revendications

1. Remorque à benne basculante (1), en particulier remorque de transfert, pour récoltes agricoles, comprenant :
- un châssis (5) comportant au moins une paire d'éléments de locomotion (8) ;
- une benne (3) pouvant pivoter par rapport à un côté arrière (5a) du châssis (5) ;
- dans laquelle la remorque à benne basculante (1) est pourvue, sur un côté avant de celle-ci, d'un attelage à tracteur (4) destiné à être accouplé à un véhicule tracteur, ou dans laquelle la remorque à benne basculante (1) se présente sous la forme d'une remorque de transfert automotrice ayant son propre mécanisme d'entraînement ;
**caractérisée en ce que** à l'avant (3a) de la benne (3), un dispositif d'accouplement (12) est prévu pour accoupler de façon détachable un module d'extension (2), comprenant en outre un dispositif de réglage pour ajuster le module d'extension (2) par rapport à la benne (3), de sorte que le module d'extension (2) peut être placé substantiellement horizontalement, quel que soit l'angle (a) formé par la benne (3).

2. Remorque à benne basculante (1) selon la revendication 1, dans laquelle le dispositif d'accouplement (12) comprend une première partie d'accouplement (12a) qui est placée sur le module d'extension (2) et une deuxième partie d'accouplement (12b) qui est placée sur la benne (3), de préférence dans laquelle le dispositif d'accouplement (12) se trouve au-dessus de l'attelage à tracteur (4).

3. Remorque à benne basculante (1) selon la revendication 1 ou 2, dans laquelle, à l'avant de la remorque à benne basculante, un élément de réglage (10), comme un vérin, est prévu pour ajuster la benne (3) par rapport au châssis (5), dans laquelle la benne (3) est réglable entre une position de repos dans laquelle la benne (3) repose sur le châssis (5), et une position relevée, dans laquelle la benne (3) forme un angle par rapport au châssis (5).

4. Remorque à benne basculante (1) selon l'une quelconque des revendications précédentes, dans laquelle le module d'extension (2) s'étend substantiellement sur toute la largeur de la benne (3) et/ou dans laquelle le module d'extension (2) est pourvu d'éléments de fixation (17) qui sont configurés pour coopérer avec des éléments de fixation correspondants du dispositif d'accouplement (12).

5. Remorque à benne basculante (1) selon l'une quelconque des revendications précédentes, dans laquelle le dispositif d'accouplement (12) comprend un cadre qui peut être attaché de façon réglable à la benne (3), dans laquelle de préférence le dispositif d'accouplement (12) est réglable autour d'un axe avant (11a) d'un convoyeur au sol (11) de la benne (3).

6. Module d'extension (2) destiné à être attaché à un dispositif d'accouplement (12) à l'avant d'une remorque à benne basculante (1) selon l'une quelconque des revendications 1 à 5, dans lequel le module d'extension (12) est configuré pour coopérer avec un dispositif d'accouplement (12) de la remorque à benne basculante (1), dans lequel le module d'extension est réglable par rapport à la benne (3) de la remorque à benne basculante (1), de sorte que le module d'extension (2) peut être placé substantiellement horizontalement, quel que soit l'angle (a) formé par la benne (3).

7. Module d'extension selon la revendication 6, dans lequel le module d'extension (2) peut être attaché de façon détachable à la remorque à benne basculante (1).

8. Module d'extension (2) selon la revendication 6 ou 7, dans lequel le module d'extension (2) est un module de transfert qui comprend un bras de transfert repliable (15), dans lequel le bras de transfert peut être déplié entre une position repliée et une position dépliée dans laquelle le bras s'étend au-delà du module.

9. Module d'extension (2) selon l'une quelconque des revendications 6 à 8, dans lequel le module d'extension (2) est pourvu de dispositifs dépendant de la récolte, comme des rouleaux de nettoyage, un bras de transfert, un tuyau à céréales, etc. selon la récolte à transférer.

10. Module d'extension (2) selon l'une quelconque des revendications 6 à 9, dans lequel le module d'extension (2) est un module de porte pour attacher de façon détachable une porte (18) à la benne (3), dans lequel de préférence le module d'extension (2) est un module de porte qui est échangeable avec un module d'extension supplémentaire.

11. Module d'extension (2) selon l'une quelconque des revendications 6 à 10, dans lequel le module d'extension (2) est pourvu d'éléments de levage pour être capable d'être levé avec un dispositif de levage, par exemple un chariot élévateur à fourche, pour permettre au module d'être accouplé au dispositif d'accouplement (12) de la remorque à benne basculante (1).

12. Module d'extension (2) selon l'une quelconque des revendications 6 à 11, dans lequel une largeur du module correspond à une largeur d'un cadre et/ou d'une benne (3) de la remorque à benne basculante (1).

13. Module d'extension (2) selon l'une quelconque des revendications 6 à 12, comprenant en outre des éléments de blocage pour bloquer le module d'extension (2) avec la remorque à benne basculante (1).

14. Ensemble constitué d'une remorque à benne basculante (1) selon l'une quelconque des revendications 1 à 5 et d'au moins un module d'extension (2), selon l'une quelconque des revendications 6 à 13, destiné à être attaché au dispositif d'accouplement (12).

15. Ensemble selon la revendication 14, dans lequel la benne (3) comprend un convoyeur au sol (11) pour transporter les récoltes dans une direction longitudinale de la benne (3), en particulier dans une direction avant.

16. Ensemble selon l'une quelconque des revendications 14 et 15, dans lequel la benne (3) peut pivoter simplement autour du côté arrière (3b), et peut en outre être déchargée par l'avant (3a) de la benne (3).

17. Ensemble selon l'une quelconque des revendications 14 à 16, dans lequel l'ensemble comprend une pluralité de modules d'extension (2) et une remorque à benne basculante (1), dans lequel les modules d'extension (2) dépendent de la récolte, de sorte qu'en fonction de la récolte, il est possible de former un assemblage d'une remorque à benne basculante (1) et d'un module d'extension qui est adapté à la récolte, dans lequel de préférence un module d'extension dépendant de la récolte (2) est un élément parmi un module de transfert de pommes de terre, un module de transfert de betteraves, un module de transfert de maïs, un module à céréales, un module à légumes.

18. Assemblage comprenant une remorque à benne basculante (1) selon l'une quelconque des revendications 1 à 5 et un module d'extension (2) selon l'une quelconque des revendications 6 à 13, dans lequel le module d'extension est accouplé de façon détachable au dispositif d'accouplement de la remorque à benne basculante.

19. Assemblage selon la revendication 18, dans lequel un module d'extension dépendant de la récolte (2), tel qu'un module de transfert de pommes de terre, un module de transfert de betteraves, un module de transfert de maïs, un module à céréales, un module à légumes, etc., est accouplé à la remorque à benne basculante (1).

20. Combinaison agricole comprenant un tracteur pourvu d'un attelage à tracteur (4) destiné à être accouplé à une remorque agricole à benne basculante (1) et un assemblage selon l'une des revendications 18 et 19.

21. Procédé de modularisation d'une remorque à benne basculante (1), comprenant les étapes suivantes :
- fournir une remorque à benne basculante (1) selon la revendication 1, comportant une benne (3) pouvant pivoter autour d'un côté arrière (5a) de la remorque ;
- placer un dispositif d'accouplement (12) à l'avant (3a) de la benne (3) ;
dans lequel le dispositif d'accouplement (12) est configuré pour accoupler de façon détachable un module d'extension (2).

22. Procédé pour équiper une remorque à benne basculante existante (1) d'une benne (3) pouvant pivoter autour d'un côté arrière (5a) de la remorque (1), comprenant le fait de fournir une remorque à benne basculante selon le préambule de la revendication 1, et de placer un dispositif d'accouplement (12) à l'avant (3a) de la benne (3), dans lequel le dispositif d'accouplement (12) est configuré pour accoupler de façon détachable un module d'extension (2), et de fournir un dispositif de réglage pour ajuster le module d'extension (2) par rapport à la benne (3), de sorte que le module d'extension (2) peut être placé substantiellement horizontalement, quel que soit l'angle (a) formé par la benne (3).

23. Procédé pour réutiliser une remorque à benne basculante (1) pour transférer différents types de récoltes agricoles, comprenant les étapes suivantes :
- fournir une remorque à benne basculante (1) selon l'une quelconque des revendications 1 à 5 ;
- fournir au moins deux modules d'extension (2) selon l'une quelconque des revendications 6 à 13, dans lequel chaque module d'extension (2) est configuré pour une utilisation particulière ;
- sélectionner un module d'extension adapté à une récolte (2) parmi lesdits au moins deux modules d'extension configurés pour une utilisation particulière (2).
